# EUROPÄISCHE PATENTANMELDUNG

(11) **EP 0 586 874 A2**
(43) Veröffentlichungstag der Anmeldung: **16.03.1994**
(21) Anmeldenummer: 93112343.4
(22) Anmeldetag: 02.08.1993
(51) Int. Cl.: C08J 5/04, C08J 11/06

(54) **Verfahren zur Herstellung von Formteilen durch Verpressen**

(30) Priorität: 14.08.1992 DE 4227034
(71) Anmelder: HOECHST AKTIENGESELLSCHAFT, D-65926 Frankfurt am Main (DE)
(72) Erfinder: Knobloch, Peter, D-86845 Grossaitingen (DE)

(57) **Zusammenfassung**

Beschrieben wird ein Verfahren zum Herstellen von Formteilen, bei dem ein faseriges Material mit einem Kleber vermischt und unter Druck bis zum Abbinden des Klebers in einer Form gehalten wird. Das Verfahren ist dadurch gekennzeichnet, daß als fasriges Material im wesentlichen geschnittene, gehäckselte und/oder gerissene synthetische Monofilamente eingesetzt werden, die dem Formteil Härte und Steifigkeit vermitteln, bei gleichzeitig großporigem freien Volumen, und daß der Kleberanteil im fertigen Formteil weniger als 10 Gew.%, bezogen auf das Formteil, beträgt.

Ferner werden Formteile aus kurzgeschnittenen Monofilamenten beansprucht, die nach dem obigen Verfahren erhältlich sind. Diese Formteile sind dadurch gekennzeichnet, daß monofiles Trägermaterial dem Formte Härte und Steifigkeit vermittelt, bei gleichzeitig großporigem freien Volumen und daß ein Kleberanteil von weniger als 10 % im fertigen Formteil im wesentlichen Zusammenhalt und elastische Eigenschaften liefert.

Mit dem Verfahren lassen sich Monofilament-Reststoffe einer erneuten Verwertung zuführen.

## Beschreibung

Die Erfindung betrifft ein Verfahren zum Herstellen von Formteilen, bei dem synthetisches monofiles Fasermaterial mit einem Kleber vermischt und unter Druck bis zum Abbinden des Klebers in einer Form gehalten wird.

Ein Verfahren zum Herstellen von Formteilen ist beispielsweise in der EP-B-0 160 270 beschrieben. Dort wird auch auf die verschiedenen Möglichkeiten zum Aufbau derartiger Materialien eingegangen. Als faserige Ausgangsmaterialien sind Reißwolle, Holz, Späne und gerissene Papierreststoffe genannt. Mit besonderem Vorteil auch Reststoffe aus der Verarbeitung von Kunstfasern, insbesondere Fasern aus Polyethylenterephthalat, im allgemeinen als Polyesterfasern bezeichnet, die in Form von Reißwolle eingesetzt werden.

Obige Patentschrift nennt im Beispiel Reißwolle aus Polyester Spunbond-Reststoffen, also ein zerissenes Spinnvlies.

Gemäß den Ansprüchen der obigen Europäischen Patentschrift wird dieses faserige Material mit einem Pulvergemisch aus einem Schmelzkleber auf Basis eines Copolymerisats aus Vinylester und mindestens einem weiteren Vinylmonomeren, einem festen Epoxidharz und einem Härter für das Epoxidharz vermischt und das zu verpressende Gemisch in einer Form unter Druck auf eine Temperatur erwärmt, bei der der Schmelzkleber flüssig wird und bei der das Epoxidharz mit seinem Härter reagiert.

Es ist bekannt, daß der erstgenannte Kleber aus Basis eines Copolymerisates aus Vinylester der so erzeugten Platte bevorzugt elastische Eigenschaften verleiht. Das feste Epoxidharz als zweiter Kleber verleiht dem Produkt Härte.

Es hat sich gezeigt, daß der ausschließliche Einsatz von Reißwollen eine große innere Oberfläche bedeutet und damit hohen Klebereinsatz erfordert. Wird dieses Material wiederum zerkleinert und erneut zu Platten verpreßt, steigt der Kleberanteil rasch an. Die Möglichkeit, die derart hergestellten Formteile nochmals zu recyclisieren, ist deshalb begrenzt.

Der vorliegenden Erfindung liegt die Aufgabe zugrunde, ein Verfahren zur Verfügung zu stellen, mit dem es möglich wird, Formteile von ausreichender Festigkeit und Härte zu erhalten, die ein- oder mehrfach recyclisierbar sind.

Dazu wird erfindungsgemäß vorgeschlagen, als Fasermaterial geschnittene Monofilamente aus vollsynthetischem, hochmolekularem Material einzusetzen. Diese verleihen dem herzustellenden Plattenmaterial eine derart ausreichende Steifigkeit, daß ausschließlich mit einem Klebersystem gearbeitet werden kann, das dem Plattenmaterial Zusammenhalt und elastische Eigenschaften verleiht und das nur in geringen Mengen zum Einsatz kommt. Dabei kann es sich z.B. um einen Schmelzkleber handeln, beispielsweise auf der Basis eines Copolymerisates aus Vinylester und eventuell einem weiteren Vinylmonomeren. In diesem Fall erhält das Plattenmaterial gewünschte elastische Eigenschaften und den Zusammenhalt als Formteil aus dem Kleber und darüber hinaus notwendige Festigkeitseigenschaften, besonders Steifigkeit und Härte aus den eingesetzten kurzgeschnittenen Monofilamenten. Gleichzeitig kann der Kleberanteil reduziert werden, da die innere Oberfläche geringer ist.

Bei dem synthetischen monofilen Fasermaterial, aus dem die erfindungsgemäßen Formteile bestehen, kann es sich um Fasermaterial aus beliebigen synthetischen Polymeren handeln, beispielsweise um Fasern aus Polyester, insbesondere aus Polyethylenterephthalat, aus Polyamid oder aus Polyolefinen.

Die einzusetzenden Monofilamente können beispielsweise Reste aus dem Herstellungsprozeß, aus dem Prozess der Weiterverarbeitung oder auch nach dem Gebrauch sein.

Die im erfindungsgemäßen Verfahren eingesetzten Monofilamente weisen üblicherweise Durchmesser von mindestens 0,1 mm, vorzugsweise von 0,12 bis 2,0 mm auf.

Bei dem Fasermaterial handelt es sich vorzugsweise um geschnittene, gehäckselte und/oder gerissene synthetische Monofilamente. Vorzugsweise handelt es sich dabei um schmelzgesponnene Monofilamente, die eine Querschnittsfläche von mindestens 0,01 mm², eine Schnittlänge von 3 bis 30 mm und ein Verhältnis von Länge zu Durchmesser von mindestens 3 aufweisen. Ein solcher Monofilamentkurzschnitt ist in dem DE-Gebrauchsmuster G 91 11 705.4 beschrieben. Geeignetes Ausgangsmaterial für derartigen Monofilament-Kurzschnitt fällt bei der Herstellung dieser Monofilamente an, bei der Weiterverarbeitung, gegebenenfalls auch nach Gebrauch. Ebenso kann dieses Monofilament auch in Form zerschnittenen bzw. gehäckselten Monofilamentgewebes mit einer Plättchenfläche von 0,1 bis 1,0 cm², abgeleitet von textilen Flächengebilden eines Flächengewichts von 50 bis etwa 2000 g/m², eingesetzt werden, wie in dem Gebrauchsmuster G 91 11 706.2 beschrieben. Ebenso kann eine Mischung dieser beiden Formen von Monofilamenten eingesetzt werden. Die Steifigkeit und Härte verleihenden Eigenschaften dieser monofilen Komponente werden nicht dadurch nennenswert beeinträchtigt, daß die Monofilamente als gehäckseltes Gewebe oder als einzelner freiliegender monofiler Kursschnitt vorliegen.

Es bestehen keine Einschränkungen bezüglich der einzusetzenden Polymersysteme. Das Arbeiten mit Einstoffsystemen erleichtert die Recycelbarkeit und ist deshalb besonders bevorzugt.

Die Art des Klebers kann in weiten Bereichen variiert werden. Neben flüssigen Klebern sind insbesondere pulverförmige Kleber geeignet. Neben Schmelzklebern können auch reaktive Kleber zum Einsatz gelangen. Hinsichtlich der Chemie ist die Auswahl des Klebers keinen Einschränkungen unterworfen. Neben Klebern auf Epoxid- und/oder Polyurethanbasis kommen auch Thermoplaste in Frage, die erhitzt und verflüssigt werden und beim Abkühlen das faserige Material verbinden.

Bevorzugte Kleber sind gebräuchliche und eingeführte Produkte aus anderen Arbeitsgebieten, deren Arbeitstemperatur unter der Schmelztemperatur der eingesetzten Fasermaterialien liegen.

Der Einsatz von Schmelzklebers erleichtert die Recycelbarkeit und ist deshalb bevorzugt.

Durch den ausschließlichen Einsatz von monofilem Material, also Fasermaterial relativ sehr großen Einzelfilamentdurchmessers, ist die innere Oberfläche der erfindungsgemäßen Formteile reduziert. Das unverändert enthaltene freie Volumen führt zu hoher Luft- und Dampfdurchlässigkeit. Wasser dringt schnell ein, läuft jedoch auch schnell wieder ab. Die Formteile sind besonders steif. Die Oberfläche ist wenig geschlossen und damit äußerst aufnahmefähig, z.B. für weitere Materialen, beispielsweise Klebstoffe, die im Zuge einer Weiterverarbeitung beim Einsatz dieses Formteils aufzubringen sind.

Das freie Volumen liegt typisch im Bereich von 50 bis 65 %, im Einzelfall im Bereich von 40 bis 80 %. Es wird aus der Dichte des Formteils und der Dichte der eingesetzten Monofilamente als Quotient errechnet. Die innere Oberfläche ist stark vom Monofilamentdurchmesser abhängig, wobei im Regelfall anzunehmen ist, daß je größer der Monofilamentdurchmesser ist, desto geringer ist die freie Oberfläche.

Die Klebermenge kann überraschenderweise besonders gering gehalten werden, da die innere Oberfläche gering ist. So nennt die oben zitierte EP-B-0 160 270 80 - 95 Gewichtsteile faseriges Material und 5 - 20 Gewichtsteile Kleber, vorzugsweise ein Gewichtsverhältnis von 90:10. Bei der vorliegenden Erfindung liegt der Kleberanteil etwa zwischen 2 und 10 Gewichtsprozenten. Insbesondere wird die Möglichkeit eröffnet, den Kleberanteil auf um und unter 5 % zu senken, beispielsweise in den Bereich von 3 - 5 %. Dem Wunsch nach Einstoffsystemen und der Möglichkeit erneuter Recycelbarkeit wird damit in besonderem Maße Rechnung getragen.

Überraschenderweise wird trotz des steifen Monofilmaterials bei der Herstellung eine ausreichende Verbindung zwischen den Monofilamenten geschaffen, da diese in einer Presse unter Druck erwärmt, zwar geringe Kontaktflächen zueinander haben, diese jedoch sehr intensiv aufeinander drücken.

Zur Herstellung der erfindungsgemäßen Formteile werden die monofile Komponente und die Kleberkomponente gemischt, in einer heizbaren Presse gleichmäßig verteilt, entsprechend dem späteren m²-Gewicht, unter Druck erhitzt. Die Temperatur richtet sich nach der Arbeitstemperatur des Klebers. Die Preßzeit ist so zu wählen, daß im Inneren des Formteils der Kleber voll reagieren kann. Preßdruck bzw. Plattenabstand der Presse richten sich nach der gewünschten Dichte des Formteils. Entlastung kann erfolgen, wenn der Kleber eine solche Klebewirkung ausübt, daß sich nach Druckentlastung das Volumen des Formteils praktisch nicht mehr verändert. Dies ist je nach Klebesystem z.B. nach Unterschreiten einer bestimmten Temperatur der Fall.

Die erfindungsgemäßen Formteile können in sehr verschiedenen Einsatzgebieten wegen ihrer tragenden Eigenschaften eingesetzt werden, etwa als stabilisierende Platte im Bereich der Verpackung beim Aufbau von Packstücken. Sie können auch als schall- und wärmedämmendes Material eingesetzt werden, beispielsweise im Bauwesen. Sie können im Fahrzeugbau als lsolations- und Antidröhnmaterial eingesetzt werden. Sie können bevorzugt dort eingesetzt werden, wo mehrere der Funktionen - tragende Eigenschaften, schall- und wärmedämmende Eigenschaften - gleichzeitig gebraucht werden. Diese Formteile können dann bevorzugt eingesetzt werden, wenn ein erneutes Recyceln vorgesehen ist. Durch den geringen Kleberanteil erfolgt nur eine langsame Anreicherung der Kleberkomponente bei wiederholtem Kreislauf. Der geringe Kleberanteil wird der Forderung nach einem Einstoffsystem weitgehend gerecht.

Es besteht die Möglichkeit, mit dem geringen Kleberanteil eine zusätzlich wasserabweisende Komponente zuzusetzen. Marktgebräuchliche Zusätze können unter den Gesichtspunkt ausgewählt werden, daß sie der Temperatur widerstehen, die maximal bei der Bildung des Formteils auftreten und mit den einzusetzenden Materialien mischbar sind.

## Patentansprüche

1. Verfahren zum Herstellen von Formteilen, bei dem ein faseriges Material mit einem Kleber vermischt und unter Druck bis zum Abbinden des Klebers in einer Form gehalten wird, dadurch gekennzeichnet, daß als fasriges Material im wesentlichen geschnittene, gehäckselte und/oder gerissene synthetische Monofilamente eingesetzt werden, die dem Formteil Härte und Steifigkeit vermitteln, bei gleichzeitig großporigem freien Volumen, und daß der Kleberanteil im fertigen Formteil weniger als 10 Gew.%, bezogen auf das Formteil, beträgt.

2. Verfahren gemäß Anspruch 1, dadurch gekennzeichnet, daß als monofiles Material gegebenenfalls mehrfach geschnittene, gehäckselte und/oder gerissene Gewebe, Gewirke, Gestricke, Gelege, Geflechte aus Monofilamenten eingesetzt werden.

3. Verfahren gemäß Anspruch 1, dadurch gekennzeichnet, daß eine Mischung aus geschnittenen Monofilamenten und dem in Anspruch 2 genannten monofilen Material eingesetzt wird.

4. Verfahren gemäß einem der Ansprüche 1 bis 3, dadurch gekennzeichnet, daß schmelzgesponnene Monofilamante zum Einsatz kommen.

5. Verfahren gemäß einem der Ansprüche 1 bis 3, dadurch gekennzeichnet, daß die Querschnittsfläche der eingesetzten Monofilamente mindestens 0,01 mm², die Schnittlänge bevorzugt 3-30 mm und das Verhältnis von Länge zu Durchmesser mindestens 3 aufweist.

6. Verfahren gemäß einem der Ansprüche 1 bis 3, dadurch gekennzeichnet, daß das Monofilament in Form eines zerschnittenen oder gehäckselten Monofilamentgewebes mit einer Plättchenfläche der zerkleinerten monofilen Flächengebilde von 0,1-1 cm² eingesetzt wird, das von textilen Flächengebilden des Flächengewichts von 50-2.000 g/m² abgeleitet ist.

7. Verfahren gemäß einem der Ansprüche 1 bis 6, dadurch gekennzeichnet, daß als Kleber ein pulverförmiger Schmelzkleber verwendet wird, und daß das monofile Material mit dem Kleber gemischt in einer Form unter Druck auf eine solche Temperatur erwärmt wird, daß der Schmelzkleber flüssig wird und unter Abbinden ein fester Formkörper entsteht.

8. Verfahren gemäß Anspruch 1, dadurch gekennzeichnet, daß ein Schmelzkleber auf der Basis eines Copolymerisates aus Vinylester und mindestens einem weiteren Vinylmonomeren eingesetzt wird.

9. Verfahren gemäß Anspruch 1, dadurch gekennzeichnet, daß der Anteil des Klebers 2-10 Gewichtsprozent, bezogen auf das Formteil, beträgt.

10. Verfahren gemäß Anspruch 9, dadurch gekennzeichnet, daß der Anteil des Klebers 3-5 Gewichtsprozent, bezogen auf das Formteil, beträgt.

11. Verfahren gemäß Anspruch 1, dadurch gekennzeichnet, daß das monofile Material mit einem Kleber und zusätzlich mit einer wasserabstoßenden Komponente vermischt wird, um einem Eindringen von Wasser infolge von Kapillarwirkung entgegenzuwirken.

12. Formteil aus kurzgeschnittenen Monofilamenten erhältlich nach dem Verfahren gemäß Anspruch 1, dadurch gekennzeichnet, daß monofiles Trägermaterial dem Formteil Härte und Steifigkeit vermittelt, bei gleichzeitig großporigem freien Volumen und daß ein Kleberanteil von weniger als 10 % im fertigen Formte im wesentlichen Zusammenhalt und elastische Eigenschaften liefert.
